# EUROPEAN PATENT SPECIFICATION

(11) **EP 0 774 702 B1**
(45) Date of publication and mention of the grant of the patent: **10.10.2001**
(21) Application number: 96308037.9
(22) Date of filing: 06.11.1996
(51) Int. Cl.: G05B 1/03

(54) **A boundary detection system for an automated robot**
System zur Ermittlung von Grenzlinien für einen automatisierten Roboter
Système de détection des lignes de démarcation pour un robot automatisé

(30) Priority: 07.11.1995 US 554691
(43) Date of publication of application: 21.05.1997
(73) Proprietor: Friendly Robotics Ltd., Even Yehuda 40500 (IL)
(72) Inventor: Peless, Ehud, Even Yehuda (IS); Abramson, Shai, Ramat Gan (IS); Dror, Gideon, Tel Aviv (IS)
(74) Representative: Belcher, Simon James

(56) References cited:
- WO-A-91/09356
- WO-A-92/09941
- DE-A- 3 733 939
- DE-A- 3 816 622
- DE-A- 3 916 730
- FR-A- 2 614 428
- FR-A- 2 696 569
- GB-A- 2 148 490
- GB-A- 2 204 434
- US-A- 4 133 404
- US-A- 4 658 928
- US-A- 5 155 775

## Description

### FIELD OF THE INVENTION

The present invention relates to a system for navigation in an enclosed area. More particularly, the invention relates to an apparatus which can be used to cause an automated device to move and to perform predetermined tasks within an enclosed area.

### BACKGROUND OF THE INVENTION

The use of automated devices is widespread nowadays and used in countless applications. For instance, robots perform very precise and delicate tasks in medicine, aviation or in the construction of electronic devices. Mobile robots are also used for example, in automatic warehouses, where goods are retrieved and stored by means of computer-actuated robots. Other applications include fetching raw materials in the course of industrial manufacturing and removing and packaging finished pieces. In everyday life, attempts have also been made to exploit robots for lawn mowing and for vacuum cleaning.

The major drawback of mobile robots, which the art has so far been unable to overcome, is the fact that their movements are limited to well predefined paths, normally requiring that they move along rails, or that they be provided with expensive navigation signs, positioned within the area in which they move, which operate as "stations" which redefine the exact position of the robot, and from which the program may direct the robot to the next station. These intermediate signs are expensive, take up space, and are inconvenient to use, since they must be very precisely positioned and cannot be easily moved.

Another approach involves providing an area delimited by boundaries recognizable by the robot, and permitting the robot to effect a random walk therein, during which it carries out its tasks. This approach has severe drawbacks; firstly, when the robot moves within a predefined area by random walking, there is no way to ensure that the whole area will be covered by the operating tool. As a result, even though the robot may operate for a long period of time, unworked areas may be left at the end of the operation. Secondly, if the area to be worked is irregular, or comprises "islands", that is, areas which must not be worked, the random walk may lead to imperfect operation around such islands, as well as at those locations where the perimeter is of irregular shape. Thirdly, because the operation of the robot is not programmed to obtain a predetermined coverage, it is necessary to allow the random walk to go on for a long period of time, so as to increase the chances of covering a major portion of the area to be worked. This is not only energy consuming, but also leads to an increased wear of the equipment, and may also be environmentally undesirable due, for example, to noise or other pollution caused by the operation of the robot. Even if the robot is operated by sun energy, most of the aforesaid problems are not overcome, and additional problems exists, connected with such a mode of operation. For instance, the robot may not work properly in areas of the world where sun radiation is scarce or low, and may be inoperative for substantial parts of the day, due to cloudy weather, for example.

A further approach involves preprogramming the robot with a blueprint of its designated area of operation, such as a floor map of a building in which a robot is to operate. This approach has two major drawbacks. Firstly, it requires preprogramming by the user, which makes in unpractical for extensive consumer use and secondly, it requires that such preprogramming is repeated each time something changes in the work area.

It is therefore clear that it would be highly desirable to be able to provide means by which automated mechanisms may move and perform their task within a predetermined area, without being hindered by the need for predefined paths and rails, or by intermediate navigation signs or preprogramming, and which may carry out their task in a predetermined manner, without relying on random occurrences and/or on unstable energy sources.

US-A-4 133 404 describes an automatic lawn mower, which comprises a sensor for detecting a light contrast boundary defining a working area.

### SUMMARY OF THE PRESENT INVENTION

The present applicant has realized, that it is possible to free automated mechanisms, operating within an enclosed zone, from the need for preprogramming, from predefined paths and rails and from the need for intermediate navigation aids. An object of the present invention is to overcome the drawbacks of the prior art and to provide means by which a robot may perform its tasks within an enclosed area in a manner free from such limitations, with high precision and in a minimal period of time.

In order to achieve the aforementioned goals a boundary detection system as defined in claim 1 is provided.

Furthermore, in accordance with a preferred embodiment of the invention the boundary markers comprise passive magnetic means detectable by a magnetic sensor.

Furthermore, in accordance with a preferred embodiment of the invention the passive magnetic means includes a plurality of pins having magnets therein.

Furthermore, in accordance with a preferred embodiment of the invention the passive magnetic means includes a multiplicity of magnets each shaped into the form of pins.

Furthermore, in accordance with a preferred embodiment of the invention the boundary markers comprise contrast means detectable by a contrast pattern code reader.

Furthermore, in accordance with a preferred embodiment of the invention the boundary includes a two color guide wire having patterns of a first color at fixed distances thereon and a second color for the non-patterned portions of the guide wire.

Furthermore, in accordance with a preferred embodiment of the invention the boundary includes a multiplicity of pins each having a contrast pattern thereon.

Furthermore, in accordance with a preferred embodiment of the invention the boundary markers comprise radioactive means and the sensor comprises a radiometer reader.

Furthermore, in accordance with a preferred embodiment of the invention the boundary includes a guide wire having a radioactive unit placed at fixed distances thereon.

Furthermore, in accordance with a preferred embodiment of the invention the boundary includes a multiplicity of pins each having a radioactive unit thereon.

Furthermore, in accordance with a preferred embodiment of the invention the boundary comprises a multiplicity of pins having at least one transceiver therein.

Furthermore, in accordance with a preferred embodiment of the invention the robot is coupled to a selected one of the group of: a lawn mower, a floor sweeper and a floor polisher.

### BRIEF DESCRIPTION OF THE DRAWINGS

The present invention will be understood and appreciated more fully from the following detailed description taken in conjunction with the drawings in which:
Fig. 1 schematically shows an enclosed area within which a robot must operate, the shaded areas representing "islands" in which the robot must not enter;
Fig. 2 shows, in cross-section, a boundary of Fig. 1, according to a particular embodiment of the invention;
Figs. 3A and 3B illustrate the method of the invention, using polar coordinates;
Fig. 4 illustrates the method of the invention, using Cartesian coordinates;
Fig. 5A and 5B are flow-sheet illustrations of an example of a location correction process, according to one preferred embodiment of the invention;
Fig. 6 is a flow chart of the operation of a system, according to one preferred embodiment of the invention;
Fig. 7 is a pictorial illustration of a lawnmower following the line of cut grass, constructed and operative in accordance with a further preferred embodiment of the present invention;
Fig. 8 is a flow chart illustration of a method of operating the lawnmower of Fig. 7;
Fig. 9 is a pictorial illustration useful in understanding the method of Fig. 8;
Fig. 10 is a schematic illustration of a lawn height sensor, useful in the method of Fig. 8;
Figs. 11A and 11B are schematic illustrations of a lawnmower, a sensor and two types of boundary markings, forming further embodiments of the present invention; and
Figs. 12A, 12B, 13A, 13B, 14A, 14B, 15 and 16 are schematic illustrations of various types of boundary markings useful in the embodiments of Figs. 11A and 11B.

### DETAILED DESCRIPTION OF PREFERRED EMBODIMENTS

The present invention will be better understood through the following illustrative and non-limitative description of preferred embodiments.

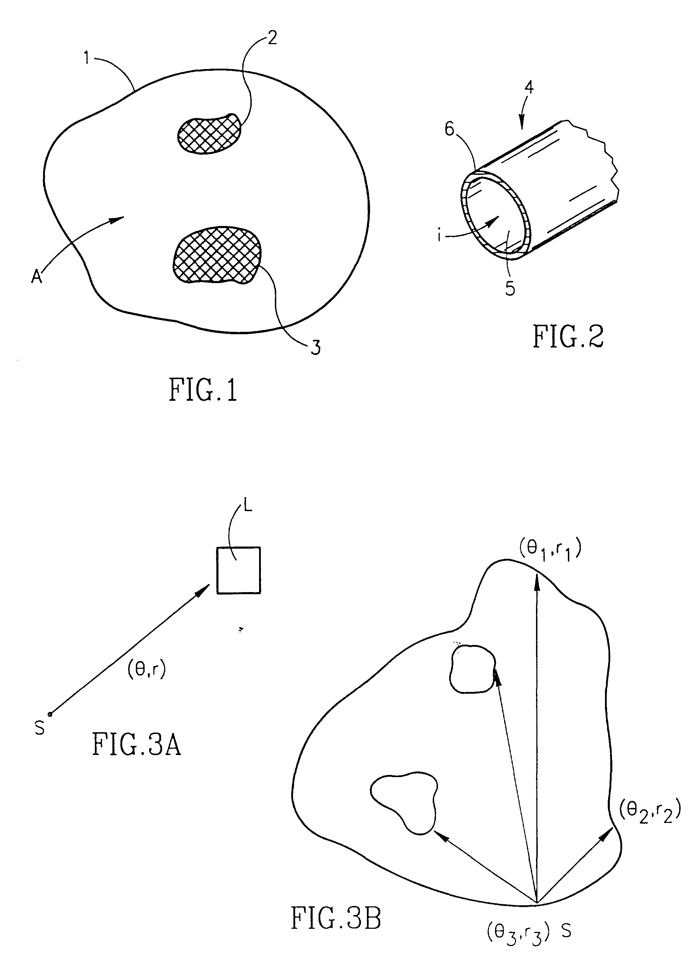

Looking now at Fig. 1, the working area in which the robot must operate, indicated at "A", is enclosed by a boundary 1. Within the working area there are "islands" in which the robot must not penetrate, which are shadowed and enclosed by boundaries 2 and 3. According to one embodiment of the invention, the robot is an automated lawn mower, and the area A is a lawn. Islands 2 and 3 may be, e.g., trees and their vicinities or flower beds. Thus, we wish the mower to operate only in areas in which grass grows, and to avoid other areas. Alternatively, the robot can be coupled to a floor sweeper or a floor polisher or any other device which has to scan a flat surface.

As stated, according to one particular embodiment of the invention, the boundaries 1, 2 and 3 may comprise a conducting wire. This type of boundary is shown in cross-section in Fig. 2, which shows a wire 4, comprising a metallic core 5 and a plastic outer layer 6. A current "i" is caused to flow through the wire, thus generating a magnetic field along the wire. The intensity of the current may be very low, since it is not necessary that the magnetic field be sensed at a great distance from the boundary, and it is sufficient that it be felt in the close vicinity of the wire. The magnetic field is sensed, according to this particular embodiment of the invention, by a magnetic field sensor provided on the lawn mower. The magnetic field and the sensor to sense it are conventional and well known in the art, and therefore are not described here in detail, for the sake of brevity.

Taking the lawn mower as an example, but it being understood that the invention is in no way limited to its use with a lawn mower, or with any other particular device, the invention operates as follows. A coordinates system is defined, as well as a starting point. Fig. 3A shows a lawn mower L relative to the starting point "S" within the lawn, the lawn mower L being at a point (⊖,r) viz. at a distance r, which is measured by measuring the movement of the mower, and at an angle ⊖ from starting point S, which is measured by means of a compass. Thus, as shown in Fig. 2B, any point within the enclosed area S will have a unique polar coordinate.

When it is desired to teach the robot the boundaries of its task, the lawn mower is caused first to move around the boundary 1 of Fig. 1. The memory means of the robot memorize the coordinates of the boundary 1, relative to starting point S. Throughout this teaching movement, the boundary sensor positioned on the robot (not shown) senses the boundary 1. Similarly, the boundaries 2 and 3 are sensed for the first time by the robot, and memorized for future use. The robot now has an initial map of the area, similar to what is shown in Fig. 3B, each point having been assigned a coordinate. The set of coordinates so created will be termed "the map" of the working area.

When it is desired to mow the lawn, the robot is brought to starting point S, and it is started according to a set of instructions which has been pre-programmed, and which may be different for each different task. For instance, a circular lawn may be better looking if mowed in circles, while a soccer field requires back-and-forth mowing. An automated lawn mower according to the invention may further be provided with a number of pre-set programs, from which the user can choose.

The robot, as said, is further provided with distance-measuring means, such as an odometer or the like device. However, these devices are not fully accurate, and may provide only approximate distance values for any given position. The error in the measurement of the distance may derive from a variety of reasons, e.g., the slipping of wheels on a moist lawn, uneven ground, etc., and the error may build up to quite a substantial extent, impairing the ability of the robot to complete its task with a high degree of precision. While, of course, precise measuring means exist, such as laser distance measurements, these are expensive and/or require calibration targets located in or around the working area. It is a purpose of the invention to avoid the use of such expensive and complicated distance-measuring means.

According to the invention, therefore, the robot starting a task continuously compares the distance measured by the odometer or other distance measuring device, with the distance from an earlier position to the boundaries in the angular coordinate it is following. If the boundary is detected earlier than anticipated according to this comparison (or, in other words, if the difference between the distance according to the map and the measured distance is negative), the robot continues to move until the boundary is detected. If the difference between the distance according to the map and the measured distance is positive, or in other words, if the boundaries are encountered earlier than expected, actual value of the coordinate is corrected to be that of the map.

The starting point will initially be the point "S", and correction of distance errors will be effected relative to this point. As work proceeds, of course, the starting point may be updated to be another point within the area, e.g., a meeting point with the boundaries, for comparison purposes with the map of the area.

Similarly, the robot has been pre-programmed to avoid "islands", but will detect an island according to the actual position of the boundary detected, and will correct its present working map based on the detection of the boundary and the original map. As will be understood by the skilled person, the larger the number of bounded areas, the higher the precision of the correction of the actual working map. Therefore, the islands actually help in keeping precision and correcting the actual working map. Therefore, if the working area is particularly large, it may be desirable to provide artificial islands for the purposes of map correction.

As will be appreciated by the skilled person, operating according to the preferred embodiment of the invention described above is very convenient also in respect of the boundaries, since the wire or coil may be embedded in the soil, thus avoiding any actual or even aesthetic disturbance to the working area, and the power requirements to generate a localized magnetic field are very small.

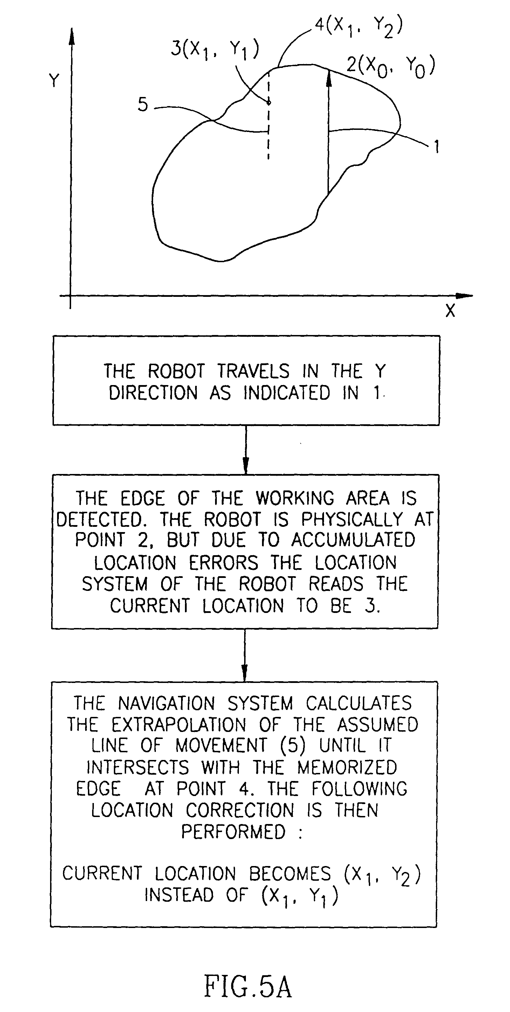

Fig. 4 shows an alternative embodiment of the invention, in which the location of each point is measured in Cartesian coordinates. As will be appreciated by the skilled person, it is not essential to the invention that any specific coordinates system be chosen, but it may be more convenient to select a particular set of coordinates, depending on the map correction process employed.

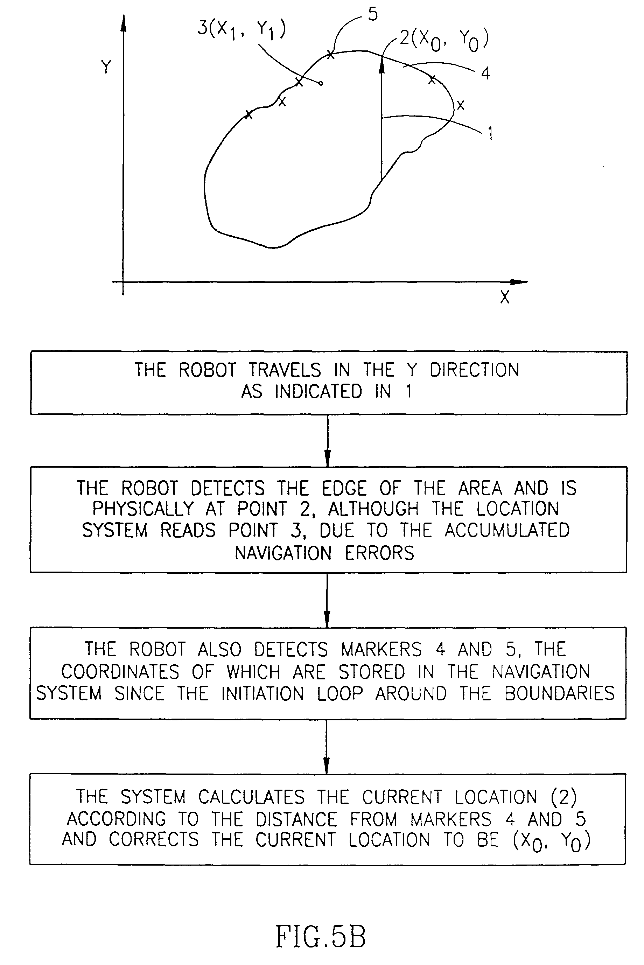

One particular process, employing Cartesian coordinates, will be described hereinafter by way of example, with reference to the flow-sheets of Figs. 5A and 5B.

In Fig. 5A the correction of an error on one axis (Y in the example shown in the flow-sheet of Fig. 5A) is shown, according to one possible embodiment of the invention, while the error in the other axis is not dealt with. Fig. 5B, on the other hand, shows a method according to another possible embodiment of the invention, in which both the X and the Y errors are corrected in one step. It should be noted that, although only the error on one axis can be corrected at a time in the embodiment of Fig. 5A, the error on the other axis can be corrected by moving in a direction perpendicular to the axis being corrected. The movement of the robot can be programmed such that both the X and Y location coordinates are updated at a suitable rate of correction.

In Fig. 5B another preferred embodiment of the invention is shown, in which the boundaries are marked with markers (4 in Fig. 5B), which have a unique identity. The markers will typically be conveniently evenly spaced, although any spacing scheme is possible. The markers can be of any suitable type, such as, and RF tag, magnetic tag or similar marker, which emits a signal identifiable by a sensor. In such a case, of course, a suitable sensor, capable of identifying unique identity signals must also be connected to the robot.

During the initiation process, the robot performs a complete loop around the edge and memorizes the shape of the boundary as well as the position of each marker (X,Y coordinates of each individual marker). This procedure allows for the correction of both the X and the Y coordinates error, each time an edge is detected, according to the method shown in the flow-sheet of Fig. 5B.

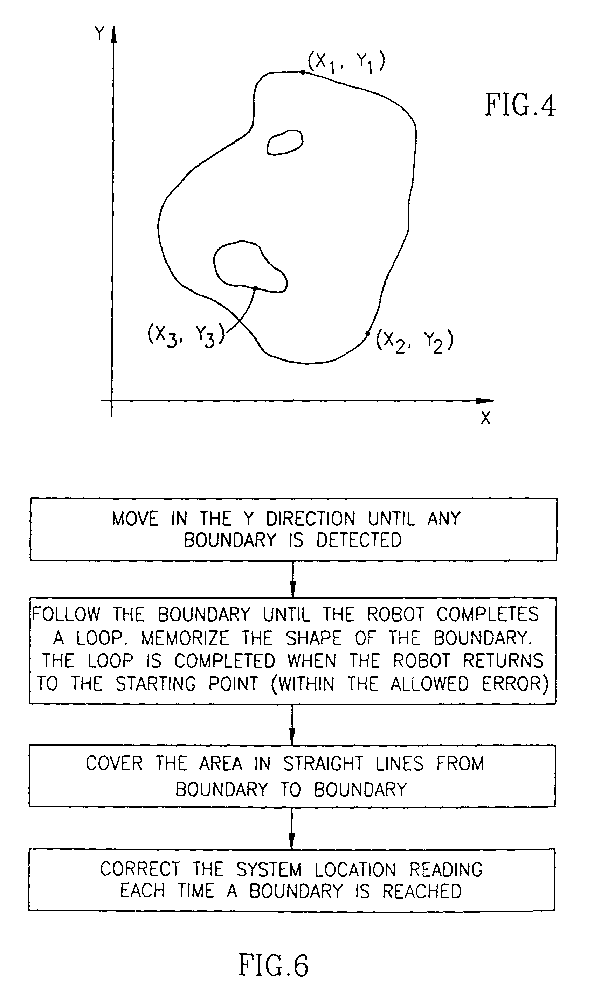

Schematically speaking, the robot will operate according to the flow-sheet of Fig. 6.

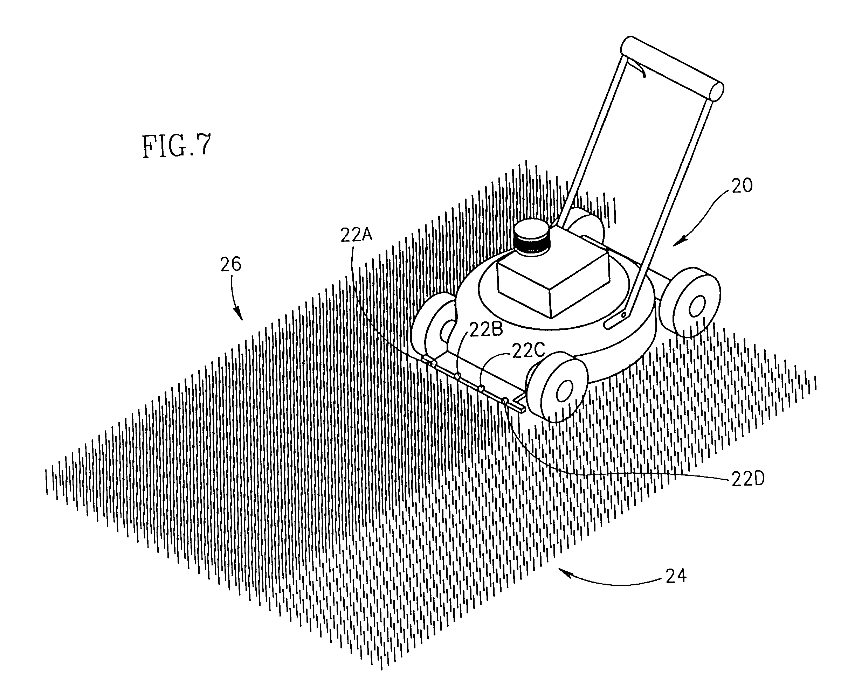

Reference is now made to Figs. 7, 8 and 9 which illustrate a further embodiment of the robotic lawnmower of the present invention. In this embodiment, the robot sweeps the space with overlapping straight lines by determining the location of the edge between uncut and cut grass.

In the present embodiment, the lawnmower, labeled 20 in Fig. 7, additionally includes a plurality of sensors 22, each one measuring the height of the grass in its general vicinity. Fig. 7 shows two areas, one 24 of cut grass and one 26 of uncut grass. Thus, sensors 22a and 22b will provide a high height output and sensors 22c and 22d will provide a low height output.

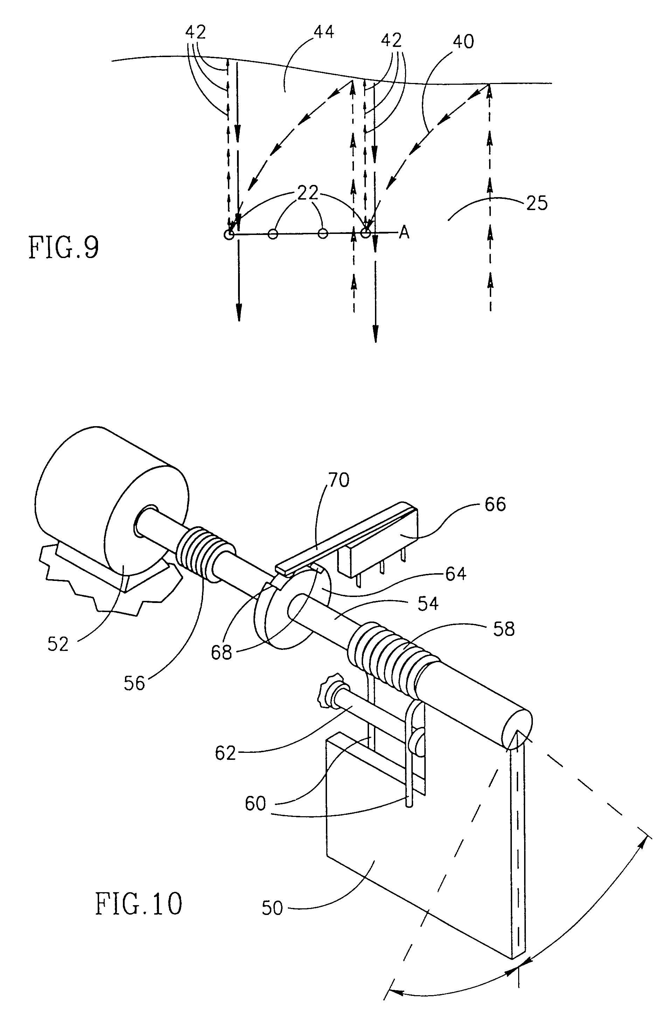

By comparing the height output of the sensors 22, the control system of the lawnmower can determine generally where the edge between cut and uncut grass is. One embodiment of a sensor 22 is illustrated in Fig. 10 and described in detail hereinbelow.

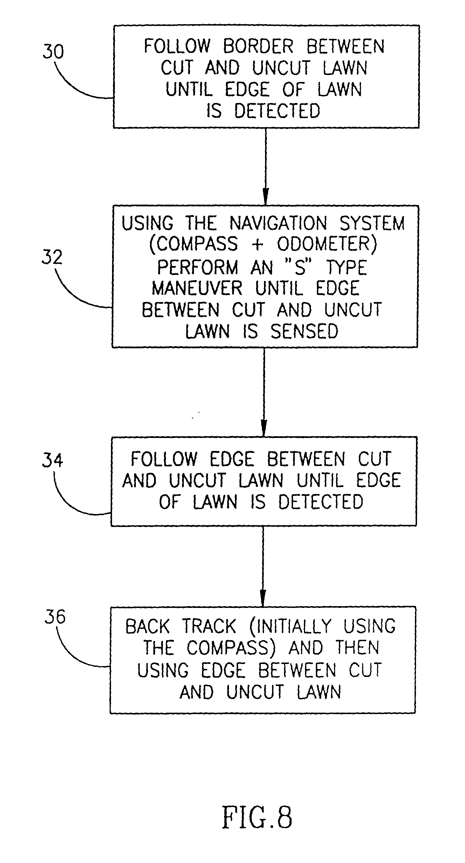

Fig. 8 details the operations performed by the control system of lawnmower 20 and Fig. 9 illustrates the movements of the lawnmower 20 at the edge of the lawn. While the lawnmower 20 is cutting a swath 25 indicated by dotted arrows in Fig. 9, the sensors 22 continually measure the height of the lawn nearby (step 30). The control system, with the navigation system (compass and odometer), steers the lawnmower 20 in the desired direction, as described hereinabove, while additionally ensuring that the edge of the lawn is maintained in a desired location vis-a-vis the sensors 22. For example, it may be desired to cut a swath which is only three-quarters the width of the lawnmower. For this situation, the edge between cut and uncut grass should be maintained between sensors 22a and 22b or between sensors 22c and 22d.

The control system maintains the desired direction until the edge of the lawn is detected, as described hereinabove. At this point, the lawnmower 20 must change direction of movement while keeping the proper percentage of uncut grass under the lawnmower 20. It is noted that the lawnmower can move both forward and backward.

Fig. 9 illustrates the change in direction. Initially, the lawnmower 20 moves in the forward direction along swath 25 (step 30). Upon reaching the edge, the lawnmower 20 performs an 'S' shaped backwards maneuver, labeled 40, using the navigation system, until the edge between cut and uncut lawn is sensed between the desired two sensors 22. This step is indicated in step 32 of Fig. 8 and produces an 'S' shaped cut in the lawn. As shown by line A in Fig. 9, the edge of the cut grass is maintained between the desired two sensors 22.

In step 34, the lawnmower 20 moves forward along the edge of the cut grass until the edge of the lawn is sensed once again. This movement is indicated by the short arrows 42 of Fig. 9. Finally, the lawnmower 20 backtracks along the new swath 44. Initially and until reaching the location of the line A, the lawnmower 20 utilizes only the compass information. Once the edge of cut grass is found again (at the location of line A), the control system utilizes both the compass and the sensor output to create the new swath 44. This is indicated at step 36 of Fig. 8.

As discussed with respect to the previous embodiments, the lawnmower 20 has to return to locations of unfinished scanning, such as locations on the opposite side of a flower bed or tree. To do so, the lawnmower 20 utilizes the navigation system to head towards the desired location and, when it is close to the desired location, it additionally senses the edge between cut and uncut grass.

Reference is now made to Fig. 10 which illustrates an exemplary lawn height sensor. The lawn sensor comprises a rotatable wing 50 connected to a potentiometer 52 via a pin 54 and a flexible joint 56. A weak spring 58 is attached around pin 54 and extensions 60 of spring 58 extend on either side of wing 50 and of a fixed pin 62. A cam 64 is connected also to pin 54 and a microswitch 66 measures the movement of cam 64.

The grass presses against the wing 50, which, since it is not heavy, will rotate. In turn, the wing 50 pushes against the relevant one of extensions 60. Since the other extension 60 is maintained in place by fixed pin 62, the spring 58 is tightened, thereby providing a returning force against the force of the grass.

The rotation of the wing causes the cam 64 and flexible joint 56 to rotate, which rotation is measured by the potentiometer 52. Furthermore, if the wing 50 rotates too far, protrusions 68 of cam 64 will press against a rod 70 connected to microswitch 66 which will indicate maximum travel of wing 50.

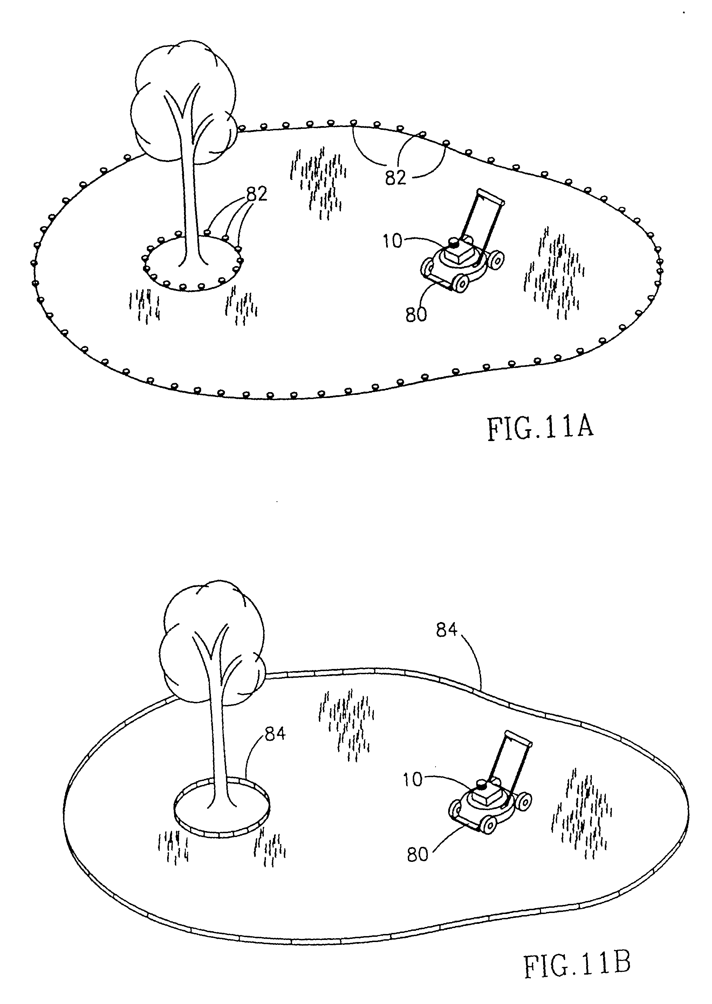

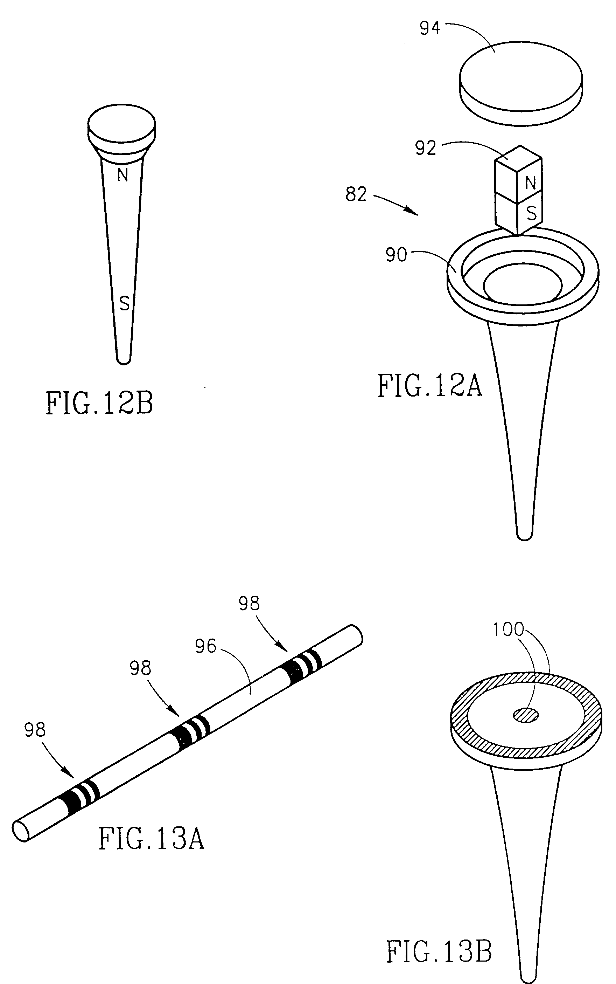

Reference is now made to Figs. 11A and 11B which illustrate two alternative embodiments of boundary markers and a sensor for detecting the boundary markers located on the lawnmower. Reference is also made to Figs. 12A, 12B, 13A, 13B, 14A, 14B, 15 and 16 which illustrate additional types of boundary markers.

Figs. 11 A and 11 B illustrate the lawnmower 10 with a boundary sensor 80 attached thereto. In Fig. 11A, the boundary is marked by a series of markers 82 placed into the ground on the edge of the lawn. Typically, the markers are placed at set distances one from the next. Alternatively, they can be placed close together along portions of the edge which are very curvy and further apart along straighter portions of the edge. In Fig. 11B, the boundary is marked by a wire 84 which is marked in some suitable and detectable manner. The type of marking matches the type of sensor attached to the lawnmower 10.

In one embodiment, shown in Figs. 12A and 12B, the boundary markers 82 have a magnet therein. In the embodiment of Fig. 12A, the boundary marker 82 is formed of a plastic pin 90, a magnet 92 placed within pin 90 and a plastic cover 94 covering the magnet-pin unit. In the embodiment of Fig. 12B, the boundary marker 82 is a metallic pin which is magnetized, as shown.

The corresponding sensor 80, for both embodiments, is a gauss meter, such as the model 4048 manufactured by F.W. Bell Inc. of the USA, or any other magnetometer which senses the magnetism in the combined unit. The distances between the boundary markers 82 are defined by the strength of the magnet 92 in such a way that at any point along the marked perimeter, at least two markers are detectable by the sensor on the robot.

In a further embodiment, shown in Figs. 13A and 13B, the sensor 82 is a bar code reader, such as the model 1516 from Intermek Inc. of Seattle, Washington, USA. The corresponding boundary markers are, in Fig. 13A, a white cable 96 with black bar code markings 98 thereon. The bar code markings 98 are located at fixed distances from each other. In Fig. 13B, the boundary markers are pins (typically of white plastic) with black markings 100 thereon.

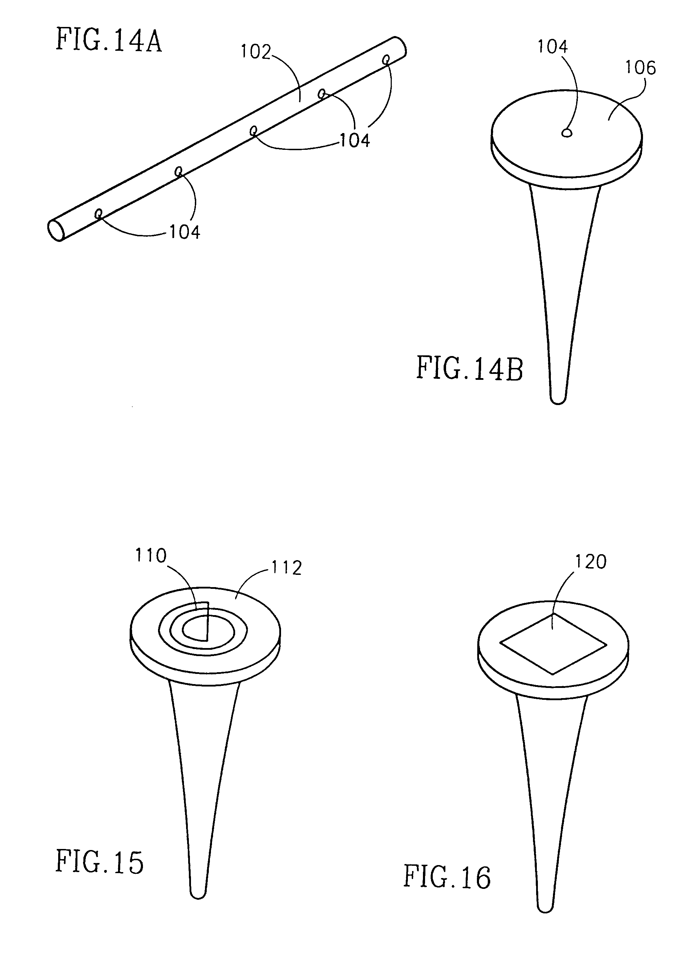

Figs. 14A and 14B illustrate a further embodiment which utilizes a Geiger counter, or other suitable radiometer, to detect the boundary markers. Fig. 14A illustrates a cable 102 having a piece of a radioactive mineral 104, such as Americium, located thereon and Fig. 14B illustrates an individual pin 106 (typically of plastic) having a radioactive mineral 104 thereon. A suitable Geiger counter for use with lawnmower 10 is the SURVIVOR 200, manufactured by Bicron Inc. of the USA.

Fig. 15 illustrates a coil-capacitor circuit 110 incorporated into a plastic or ceramic substance 112. Such a circuit 110 is then placed into a pin unit such as pin 90 and cover 94 of Fig. 12A. The corresponding sensor 80 is a resonance tag reader such as the ones manufactured by Checkpoint Inc. of Thorofare, New Jersey, USA, for anti-theft protection in stores, such as clothing stores. The coil-capacitor unit 110 can be similar to those manufactured by Checkpoint or any other suitable coil-capacitor unit.

Fig. 16 illustrates a further embodiment utilizing transceiver units 120. The transceiver unit 120 can be any suitable narrow band transmitting and receiving unit and is typically placed into a pin unit such as pin 90 and cover 94 of Fig. 12A. The corresponding sensor is a similar transceiver. Each transceiver, within each pin, operates at the same frequency and the sensor transceiver continually determines how close it is to the nearest transceiver unit 120. When the sensor transceiver comes to within a predetermined distance, the sensor transceiver determines that it has reached the boundary.

For all of the above embodiments, the sensor 80 determines that the lawnmower 10 has reached the boundary when the signal sensor 80 receives is at or above a threshold level which is calculated as the expected reading five to ten inches from the marker or cable.

It will be appreciated that other types of markers and their corresponding detectors are incorporated within the present invention.

## Claims

1. A boundary detection system comprising an automated robot which is to operate within a working area, the boundary detection system comprising:
(a) boundary markers which define an outer boundary placed along the perimeter of the working area, and an inner boundary placed along the perimeter of each area enclosed in the working area in which it is desired that the robot should not operate;
(b) a sensor mounted on the robot which can detect the boundary markers;
(c) memory means on the robot for storing data which is generated by the sensor relating to the inner and outer boundaries, and for generating a map of the areas within the enclosed area in which the robot is to operate from boundary data which is generated by moving the robot around the outer boundary of the working area.

2. A system as claimed in claim 1, in which the boundary markers comprise passive magnetic means and the sensor is a magnetic sensor.

3. A system as claimed in claim 2, in which the passive magnetic means comprises a plurality of pins having magnets therein.

4. A system as claimed in claim 2, in which the passive magnetic means comprises a multiplicity of magnets each shaped into the form of pins.

5. A system as claimed in claim 1, in which the boundary markers comprise contrast means and the sensor comprises a contrast pattern code reader.

6. A system as claimed in claim 5, in which the boundary comprises a two colour guide wire having patterns of a first colour at fixed distances thereon and a second colour for the non-patterned portions of the guide wire.

7. A system as claimed in claim 5, in which the boundary comprises a multiplicity of pins each having a contrast pattern thereon.

8. A system as claimed in claim 1, in which the boundary markers comprise radioactive means and the sensor comprises a radiometer reader.

9. A system as claimed in claim 8, in which the boundary comprises a guide wire having a radioactive unit placed at fixed distances thereon.

10. A system as claimed in claim 8, in which the boundary comprises a multiplicity of pins each having a radioactive unit thereon.

11. A system as claimed in claim 1, in which the boundary markers comprise a multiplicity of pins having at least one transceiver therein and the sensor comprises a transceiver.

12. A system as claimed in claim 1, in which the robot forms part of a lawn mower, a floor sweeper or a floor polisher.

## Patentansprüche

1. Begrenzungsdetektiersystem, das einen automatischen Roboter aufweist, der innerhalb eines Arbeitsbereichs wirksam sein soll, wobei das Begrenzungsdetektiersystem folgendes aufweist:
(a) Begrenzungsmarkierungen, die eine äußere Begrenzung, die entlang dem Umfang des Arbeitsbereichs angeordnet ist, und eine innere Begrenzung bilden, die entlang dem Umfang jedes in dem Arbeitsbereich umschlossenen Bereichs ist, in dem der Roboter nicht wirksam soll;
(b) einen an dem Roboter angebrachten Sensor, der die Begrenzungsmarkierungen detektieren kann;
(c) eine Speichereinrichtung an dem Roboter zum Speichern von die innere und die äußere Begrenzung betreffenden Daten, die von dem Sensor erzeugt werden, und zum Erzeugen einer Karte der Bereiche innerhalb des umschlossenen Bereichs, in dem der Roboter wirksam sein soll, aufgrund von Begrenzungsdaten, die durch die Bewegung des Roboters um die äußere Begrenzung des Arbeitsbereichs herum erzeugt werden.

2. System nach Anspruch 1,
wobei die Begrenzungsmarkierungen passive magnetische Einrichtungen aufweisen und der Sensor ein magnetischer Sensor ist.

3. System nach Anspruch 2,
wobei die passiven magnetischen Einrichtungen eine Vielzahl von Stiften mit Magneten darin aufweisen.

4. System nach Anspruch 2,
wobei die passiven magnetischen Einrichtungen eine Vielzahl von Magneten aufweisen, von denen jeder die Form eines Stiftes hat.

5. System nach Anspruch 1,
wobei die Begrenzungsmarkierungen Kontrasteinrichtungen aufweisen und der Sensor einen Kontrastmustercodeleser aufweist.

6. System nach Anspruch 5,
wobei die Begrenzung einen zweifarbigen Führungsdraht aufweist, der Muster einer ersten Farbe in festen Abständen daran und eine zweite Farbe für die nicht gemusterten Bereiche des Führungsdrahts hat.

7. System nach Anspruch 5,
wobei die Begrenzung eine Vielzahl von Stiften aufweist, von denen jeder ein Kontrastmuster daran hat.

8. System nach Anspruch 1,
wobei die Begrenzungsmarkierungen radioaktive Einrichtungen aufweisen und der Sensor einen Radiometerleser aufweist.

9. System nach Anspruch 8,
wobei die Begrenzung einen Führungsdraht aufweist, an dem radioaktive Einheiten in festen Abständen angebracht sind.

10. System nach Anspruch 8,
wobei die Begrenzung eine Vielzahl von Stiften aufweist, von denen jeder eine radioaktive Einheit daran hat.

11. System nach Anspruch 1,
wobei die Begrenzungsmarkierungen eine Vielzahl von Stiften aufweisen, die mindestens einen Sender-Empfänger darin haben, und wobei der Sensor einen Sender-Empfänger aufweist.

12. System nach Anspruch 1,
wobei der Roboter Teil eines Rasenmähers, eines Bodenkehrgeräts oder eines Bodenpoliergeräts ist.

## Revendications

1. Système de détection de limite comprenant un robot automatisé qui est prévu pour fonctionner dans une zone de travail, système de détection de limite comprenant :
a) des repères de limite définissant une limite externe placés le long du périmètre de la zone de travail, et une limite interne placés le long du périmètre de chaque zone incluse dans la zone de travail dans laquelle on désire que le robot ne fonctionne pas ;
b) un capteur monté sur le robot pouvant détecter les repères de limite ;
c) un moyen de mémoire sur le robot pour le stockage de données qui sont générées par le capteur en ce qui concerne les limites interne et externe, et pour générer une carte des zones dans la zone incluse dans laquelle le robot est prévu pour fonctionner à partir des données de limite qui sont générées par déplacement du robot autour de la limite externe de la zone de travail.

2. Système selon la revendication 1, dans lequel les repères de limite comprennent des moyens magnétiques passifs et le capteur est un capteur magnétique.

3. Système selon la revendication 2, dans lequel le moyen magnétique passif comprend une pluralité de doigts possédant des aimants intégrés.

4. Système selon la revendication 2, dans lequel le moyen magnétique passif comprend une pluralité d'aimants formés chacun selon des doigts.

5. Système selon la revendication 1, dans lequel les repères de limite comprennent des moyens de contraste et le capteur comprend un lecteur de code à motif contrasté.

6. Système selon la revendication 5, dans lequel la limite comprend un fil de guidage à deux couleurs possédant des motifs d'une première couleur sur des distances fixées et d'une seconde couleur pour les parties sans motif du fil de guidage.

7. Système selon la revendication 5, dans lequel la limite comprend une pluralité de doigts possédant chacun un motif contraste placé dessus.

8. Système selon la revendication 1, dans lequel les repères de limite comprennent des moyens radioactifs et le capteur comprend un lecteur à radiomètre.

9. Système selon la revendication 8, dans lequel la limite comprend un fil de guidage possédant une unité radioactive placée selon des distances fixées.

10. Système selon la revendication 8, dans lequel la limite comprend une pluralité de doigts possédant chacun une unité radioactive placée dessus.

11. Système selon la revendication 1, dans lequel les repères de limite comprennent une pluralité de doigts possédant au moins un émetteur/récepteur placé dessus et le capteur comprend un émetteur/récepteur.

12. Système selon la revendication 1, dans lequel le robot fait partie d'une tondeuse à gazon, une balayeuse de sol ou un polisseur de sol.
